# FASCICULE DE BREVET EUROPEEN

(11) **EP 1 012 077 B1**
(45) Date de publication et mention de la délivrance du brevet: **16.01.2002**
(21) Numéro de dépôt: 98922852.3
(22) Date de dépôt: 23.04.1998
(51) Int. Cl.: B65G 11/08

(54) **DISPOSITIF STATIQUE MAINTENANT L'HOMOGENEITE D'UN MELANGE DE POUDRES SOUMIS A UN ECOULEMENT GRAVITAIRE**
STATISCHE VORRICHTUNG ZUR AUFRECHTERHALTUNG DER HOMOGENITÄT EINER EINER SCHWERKRAFT UNTERWORFENEN PULVERMISCHUNG
STATIC DEVICE MAINTAINING THE HOMOGENEITY OF A MIXTURE OF POWDERS SUBJECTED TO A GRAVITY-INDUCED FLOW

(30) Priorité: 24.04.1997 FR 9705077
(43) Date de publication de la demande: 28.06.2000
(73) Titulaire: COMPAGNIE GENERALE DES MATIERES NUCLEAIRES, 78140 Velizy Villacoublay (FR)
(72) Inventeur: WOIGNIER, Sylvie, F-84120 Pertuis (FR); GILLY, Francis, F-05000 Gap (FR)
(74) Mandataire: Ilgart, Jean-Christophe
(86) Numéro de dépôt international: FR9800813
(87) Numéro de publication internationale: WO9847791

(56) Documents cités:
- FR-A- 1 385 615
- FR-A- 2 621 447
- US-A- 1 839 712
- US-A- 2 502 341
- US-A- 2 693 264
- US-A- 5 086 902

## Description

Le sujet de l'invention est un dispositif statique maintenant l'homogénéité d'un mélange de poudres soumis à un écoulement gravitaire.

On est parfois amené à assurer l'écoulement de mélanges de poudres dont les composants ont des caractéristiques très différentes de densité, de granulométrie, de surface spécifique, etc. Des échantillons peuvent être prélevés à différents endroits du chemin suivi par le mélange pour vérifier que son homogénéité se maintient : on a en effet constaté que la ségrégation de certains au moins des composants de tels mélanges apparaissait très facilement, ce qui compromettait la qualité du processus de fabrication et d'emploi du mélange. Cette perte d'homogénéité était produite en particulier dans les tronçons verticaux des chemins d'écoulement, quand le mélange était soumis à une chute libre, probablement en raison des effets divers de la résistance de l'air sur les différents composants.

Des solutions de différentes sortes ont déjà été proposées pour maintenir homogènes les mélanges de poudres : certaines consistent à traiter le mélange lui-même, en choisissant des composants ayant des caractéristiques analogues ou en ajoutant des liants qui assurent la cohésion des différents composants, mais ces solutions qui ont une conséquence sur la composition du mélange sont contraignantes ; on a aussi proposé des dispositifs mécaniques tels que des couloirs vibrants, des mélangeuses à vis, à spirales tournantes, etc. placés à des endroits convenables du chemin suivi par le mélange pour y produire des mouvements de brassage et maintenir son homogénéité ou du moins la rétablir, mais ces moyens mécaniques motorisés compliquent et enchérissent le dispositif.

Il est proposé ici une pièce utilisable à l'emplacement des tronçons verticaux des chemins d'écoulement, et dont l'intérêt est de maintenir l'homogénéité du mélange par un brassage constant et par des moyens entièrement statiques, qui ne demandent donc aucun entretien.

Le chemin d'écoulement vertical est alors délimité par un dispositif composé essentiellement d'une série de rigoles séparées et latéralement inclinées dans des sens opposés, chacune des rigoles s'étendant dans une direction coupant une rigole immédiatement inférieure.

Cette disposition est semblable à celle du document US-2 502 341-A, conçue en particulier pour des grains de café, mais l'invention se distingue du document antérieur par d'autres caractéristiques : les rigoles sont formées de plaques s'élargissant et s'incurvant davantage vers le bas, ce qui renforce le brassage du mélange coulant sur elles ; de plus, un tuyau délimite aussi le chemin d'écoulement et contient les rigoles : l'intérieur du tube est cloisonné et divisé en compartiments qui interdisent la dispersion des particules les plus fines, qui tendent à rester en suspension. Enfin, le document US-2 693 264 A, relatif au ramassage de fruits, décrit un dispositif conforme au préambule de la revendication 1.

La description de l'invention sera maintenant menée plus en détail à l'aide des figures suivantes, annexées à titre illustratif et non limitatif :
- la figure 1 est une vue générale du dispositif placé dans le chemin d'écoulement,
- et la figure 2 illustre une des rigoles employées.

Un tuyau 1 délimite le volume du chemin d'écoulement vertical du mélange de poudres. L'intérieur du tuyau 1 est occupé par le reste 2 du dispositif de l'invention et qui comprend essentiellement une série de rigoles 3 disposées en épi, superposées et inclinées latéralement dans des sens alternés en faisant avec la verticale des angles qui peuvent être compris entre 15° et 45°. Les rigoles 3 sont espacées les unes des autres et chacune (sauf évidemment la rigole 3 la plus basse) s'étend dans une direction qui coupe la rigole 3 immédiatement inférieure. Les poudres coulant successivement dans les rigoles 3 les quittent donc en dépassant leur bord inférieur 4 et sont projetées dans la rigole 3 située juste au-dessous, qui guide alors leur écoulement en infléchissant sa direction.

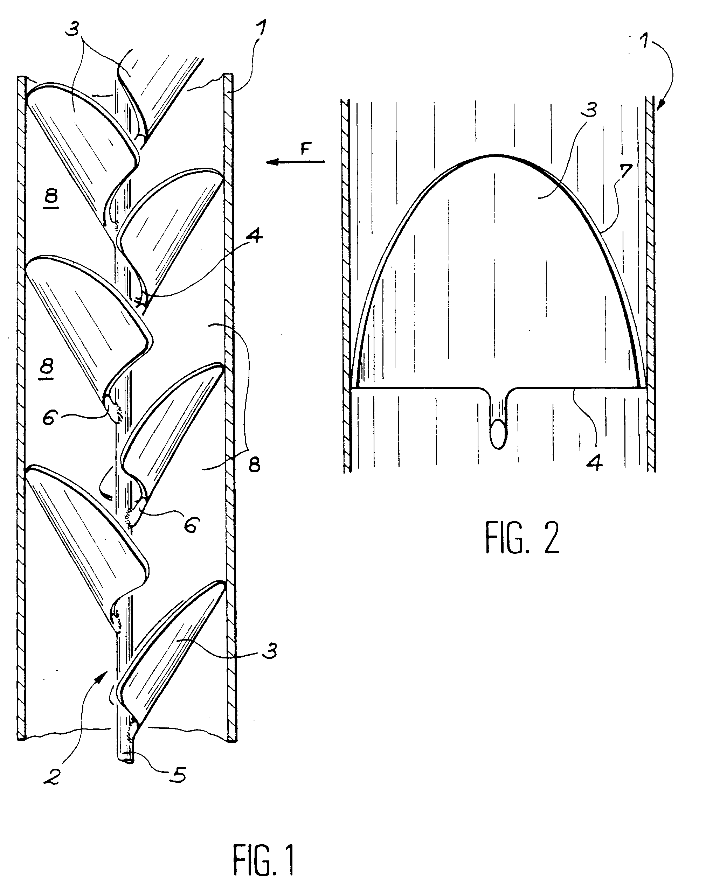

L'écoulement purement vertical de chute libre qui serait produit si le tuyau 1 était vide est donc remplacé par un écoulement globalement vertical formé de zigzags d'une rigole 3 à l'autre. Un mouvement de brassage du mélange de poudres est ainsi produit, qui rétablit toujours son homogénéité. Les rigoles 3 étant formées à partir de plaques façonnées à une forme relativement plate vers le sommet mais de plus en plus incurvée vers le bord inférieur 4, l'écoulement de poudre tend à se rassembler vers le centre des rigoles 3 en glissant sur elles, ce qui exerce un brassage supplémentaire. La figure 2 montre que les rigoles 3 peuvent être produites à partir de plaques à contour approximativement semi-elliptique et dont la forme est voisine de celles d'une pelle. Les rigoles 3 peuvent être assemblées à une tige de liaison commune 5 verticale, qui s'étend entre leurs bords inférieurs 4, par des pédicules 6.

La représentation de la figure 2 est une projection horizontale, c'est-à-dire que la rigole 3 qui y est illustrée est vue selon la flèche F de la figure 1. Les rigoles 3 sont choisies à une forme permettant de les appuyer sur tout leur périmètre 7 (hormis le bord inférieur 4, et donc sur toute la partie courbe du périmètre 7) sur la face interne du tuyau 1. L'intérieur de celui-ci est donc divisé en compartiments 8 par les rigoles 3, qui ne communiquent entre eux qu'autour de la tige de liaison commune 5. Cette disposition est importante dans l'utilisation privilégiée ici d'un mélange de poudres dont certaines peuvent être très fines et tendre à rester en suspension : elles restent alors dans un même compartiment 8 sans pouvoir se disperser et s'échapper du dispositif, en s'élevant par exemple ; elles reviennent tôt ou tard dans la région d'écoulement des poudres, où elles sont reprises et entraînées plus bas. Un débit suffisamment constant dans le temps est donc obtenu même pour ces poudres très fines à la chute problématique.

## Revendications

1. Chemin d'écoulement vertical délimité par une série de rigoles (3) séparées et latéralement inclinées dans des sens opposés, et par un tuyau (1) dans lequel les rigoles (3) sont contenues, les rigoles (3) touchant le tuyau (1) sur une partie de leur périmètre (7) et divisant l'intérieur du tuyau (1) en compartiments (8), **caractérisé en ce que** les rigoles (3) sont formées de plaques s'élargissant et s'incurvant davantage vers le bas et chacune des rigoles s'étendant dans une direction coupant une rigole immédiatement inférieure.

2. Chemin d'écoulement selon la revendication 1, **caractérisé en ce que** les rigoles sont assemblées par des pédicules (6) à une tige de liaison commune (5) située entre les rigoles (3).

## Patentansprüche

1. Vertikale Rutschbahn, abgegrenzt durch eine Serie von getrennten, in entgegengesetzten Richtungen zur Seite geneigten Rinnen (3) und durch ein Rohr (1), in dem die Rinnen (3) enthalten sind, wobei die Rinnen (3) das Rohr (1) über einen Teil ihrer äußeren Begrenzung (7) berühren und das Innere des Rohrs (1) in Abteile (8) unterteilen,
**dadurch gekennzeichnet,**
**dass** die Rinnen (3) durch Platten gebildet werden, die sich nach unten erweitern und stärker krümmen, und sich dabei jede der Rinnen in einer Richtung erstreckt, die eine unmittelbar darunter befindliche Rinne schneidet.

2. Vertikale Rutschbahn nach Anspruch 1, **dadurch gekennzeichnet, dass** die Rinnen durch Stiele (6) an einer gemeinsamen Verbindungsstange (5) befestigt sind, die sich zwischen den Rinnen (3) befindet.

## Claims

1. Vertical flow path delimited by a series of channels (3) laterally inclined in opposite directions and by a pipe (1) in which the channels (3) are contained, the channels (3) touching the pipe (1) over a portion of their perimeter (7) and subdividing the interior of the pipe (1) into compartments (8), **characterized in that** the channels (3) are formed by plates which widen and curve more towards the bottom and each of the channels extends in a direction intersecting an immediately lower channel.

2. Flow path according to claim 1, **characterized in that** the channels are assembly by pedicles (6) to a common connecting rod (5) located between the channels (3).
